# FASCICULE DE BREVET EUROPEEN

(11) **EP 4 458 425 B1**
(45) Date de publication et mention de la délivrance du brevet: **18.11.2026**
(21) Numéro de dépôt: 24170118.4
(22) Date de dépôt: 12.04.2024
(51) Int. Cl.: A62B 35/00, D03D 3/02, D04C 1/12, D06H 5/00, D07B 7/16, F16G 15/12

(54) **CONNECTEUR TEXTILE, HARNAIS D'ENCORDEMENT COMPORTANT UN TEL CONNECTEUR TEXTILE ET PROCÉDÉ DE FABRICATION**
TEXTILVERBINDER, KABELBAUM MIT EINEM SOLCHEN TEXTILVERBINDER UND HERSTELLUNGSVERFAHREN
TEXTILE CONNECTOR, HARNESS COMPRISING SUCH A TEXTILE CONNECTOR AND MANUFACTURING METHOD

(30) Priorité: 04.05.2023 FR 2304491
(43) Date de publication de la demande: 06.11.2024
(73) Titulaire: Zedel, 38920 Crolles (FR)
(72) Inventeur: BLONDEAU, Loïc, 38700 LA TRONCHE (FR)
(74) Mandataire: Talbot, Alexandre

(56) Documents cités:
- FR-A1- 3 061 211
- US-A1- 2005 093 317
- US-A1- 2008 229 558
- US-B2- 8 348 318

## Description

### Domaine technique

L'invention est relative à un connecteur textile, à un harnais d'encordement et à un procédé de fabrication d'un tel connecteur textile.

### Technique antérieure

Dans le domaine des travaux en hauteur, il est connu de former des connecteurs textiles qui se présentent sous la forme d'un anneau. Dans un mode de réalisation particulier, deux extrémités d'une sangle sont fixées l'une sur l'autre pour définir un anneau fermé apte à supporter un effort conséquent, par exemple une chute.

Un connecteur textile est communément utilisé dans les harnais d'escalade pour connecter les tours de cuisse et la ceinture. Un procédé de fabrication du connecteur est divulgué dans le document FR2857879 ainsi que dans le document US2008/229558. Le document US2008/229558 divulgue un textile tubulaire, notamment une tresse, qui est replié sur lui plusieurs fois ou qui est enroulé afin de former l'anneau.

Il est également connu du document EP3069764 de former un connecteur annulaire qui possède une gaine formée par une sangle. Un fil est enroulé de manière à définir plusieurs cercles superposés les uns sur les autres. Une sangle est installée pour envelopper l'ensemble des cercles et définir un anneau de sangle. Une couture linéaire est réalisée qui s'étend selon la direction longitudinale de la sangle de manière à conformer la sangle en un anneau tubulaire, c'est-à-dire sous la forme d'une gaine tubulaire dont les fils sont conformés en cercle pour former l'âme du connecteur. Il ressort que ce procédé de réalisation est difficile à mettre en œuvre. Il apparait également que les deux épaisseurs de sangle fixées l'une à l'autre forment une zone de rigidité qui peut compliquer l'utilisation du connecteur. La couture linéaire s'étend généralement sur toute face interne de l'anneau.

Le document US2020/0108294 divulgue un fil qui est enroulé afin de former plusieurs cercles. Les cercles sont disposés autour d'un textile annulaire qui est ensuite replié autour des cercles de manière à enfermer les cercles de fil à l'intérieur d'une gaine formée par le textile tubulaire. Une couture est formée sur la périphérie de la gaine.

Les documents US 8 348 318 B2, FR 3 061 211 A1 et US 2008/0229558 A1 divulguent d'autres anneaux de l'état de l'art.

Enfin le document US2005/0093317 A1 montre un connecteur textile annulaire selon le préambule de la revendication 1.

### Objet de l'invention

Un objet de l'invention consiste à prévoir un connecteur qui présente une meilleure homogénéité de la gaine.

On tend à atteindre ce résultat au moyen d'un connecteur textile selon la revendication 1 et notamment un connecteur textile comportant :
- un élément filaire formant une pluralité de boucles, les boucles assurant une résistance mécanique du connecteur textile ;
- un élément textile conformé en un anneau tubulaire pour former une gaine autour de la pluralité de boucles; et
- une couture formée au moyen d'au moins un fil traversant plusieurs fois l'élément textile pour fermer l'anneau tubulaire.

Le connecteur textile est remarquable en ce que l'élément textile est un élément textile tubulaire définissant un trou traversant depuis une première extrémité jusqu'à une deuxième extrémité opposée selon un axe longitudinal ; en ce que la couture la première extrémité avec la deuxième extrémité et définit des liaisons décalées angulairement les unes des autres lors d'une observation selon l'axe longitudinal.

De manière avantageuse, l'élément filaire possède une première extrémité et une deuxième extrémité qui ne sont pas fixées l'une à l'autre, l'élément filaire définissant au moins quatre boucles.

Dans une configuration particulière, l'élément filaire possède une première extrémité et une deuxième extrémité qui sont fixées l'une à l'autre par un nœud.

Dans un développement avantageux, les boucles représentent un taux de remplissage de l'intérieur de l'anneau tubulaire d'au moins 50%.

Préférentiellement, les liaisons relient la face externe de la première extrémité et la face externe de la deuxième extrémité en enjambant au moins une de la première extrémité et de la deuxième extrémité pour former une glissière selon l'axe longitudinal.

Préférentiellement, la première extrémité est une extrémité externe qui recouvre la deuxième extrémité formant une extrémité interne, l'extrémité externe recouvrant l'extrémité interne pour définir une zone de recouvrement. Les liaisons s'étendent depuis la zone de recouvrement de l'extrémité externe jusqu'à l'extrémité interne hors de la zone de recouvrement selon l'axe longitudinal.

Selon un mode de réalisation, deux liaisons consécutives sont décalées selon l'axe longitudinal.

De manière préférentielle, les liaisons sont contenues dans un plan qui est perpendiculaire à l'axe longitudinal.

Avantageusement, les liaisons successives s'étendent sur un secteur angulaire au moins égal à 180°. Encore plus avantageusement, les liaisons successives s'étendent sur un secteur angulaire au moins égal à 360°.

Dans un développement préférentiel, la couture est une couture radiale avec des liaisons qui traversent une section centrale de l'élément textile tubulaire, la section centrale correspondant à une section circulaire représentant moins de 50% de la section de l'élément textile tubulaire.

L'invention a également pour objet un harnais d'encordement dont le lien entre la ceinture et les tours de cuisse est plus performant que les liens de l'art antérieur. On tend à atteindre ce résultat au moyen d'un harnais d'encordement comportant une ceinture une paire de tours de cuisse et un connecteur textile selon l'une quelconque des configurations précédentes, le connecteur textile reliant la ceinture et la paire de tours de cuisse.

L'invention a également pour objet un procédé de fabrication d'un connecteur textile qui est facile à mettre en œuvre et qui permet de former un connecteur textile plus performant que ceux de l'art antérieur.

On tend à atteindre ce résultat au moyen d'un procédé de fabrication d'un connecteur textile selon la revendication 13 et notamment un procédé de fabrication comportant les étapes suivantes :
- fournir un élément textile tubulaire définissant un trou traversant et un élément filaire :
- enrouler l'élément filaire pour former une pluralité de boucles, chaque boucle passant à travers le trou traversant ;
- étirer l'élément textile pour rejoindre les deux extrémités de l'élément textile et former un anneau tubulaire autour des boucles ;
- fixer les deux extrémités de l'élément textile par une couture formée au moyen d'au moins un fil traversant plusieurs fois les deux extrémités longitudinales de l'élément textile pour fermer l'anneau tubulaire, la couture définissant des liaisons décalées angulairement les unes des autres lors d'une observation selon l'axe longitudinal.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
Figure 1 : une vue schématique d'une première étape de fabrication d'un connecteur textile ;
Figure 2 : une vue schématique d'une deuxième étape de fabrication d'un connecteur textile ;
Figure 3 : une vue schématique d'une deuxième étape de fabrication d'un connecteur textile selon un autre mode de réalisation ;
Figure 4 : une vue schématique d'une troisième étape de fabrication d'un connecteur textile ;
Figure 5 : une vue schématique en coupe de la fermeture d'un connecteur textile selon un mode de réalisation particulier d'une couture radiale traversante ;
Figure 6 : une vue schématique de côté de la fermeture d'un connecteur textile avec une couture en spirale ;
Figure 7 : une vue schématique de côté de la fermeture d'un connecteur textile selon un autre mode de réalisation avec une couture radiale ;
Figure 8 : une vue schématique en coupe de la fermeture d'un connecteur textile selon un plan de coupe perpendiculaire à l'axe longitudinal avec une couture radiale partielle ;
Figure 9 : une vue schématique en coupe de la fermeture d'un connecteur textile selon un plan de coupe perpendiculaire à l'axe longitudinal avec une couture radiale traversante ;
Figure 10 : une vue schématique en élévation d'un connecteur textile selon le mode de réalisation illustré aux figures 7 à 9 ;
Figure 11 : une vue en élévation d'un harnais d'encordement comportant un connecteur textile ;
Figure 12 : une vue en coupe d'un connecteur textile dépourvu d'élément filaire et d'élément de remplissage ;
Figure 13 : une vue en coupe d'un connecteur textile muni d'un élément de remplissage ;
Figure 14 : une vue en élévation d'un harnais d'encordement comportant d'autres connecteurs textiles.

### Description des modes de réalisation

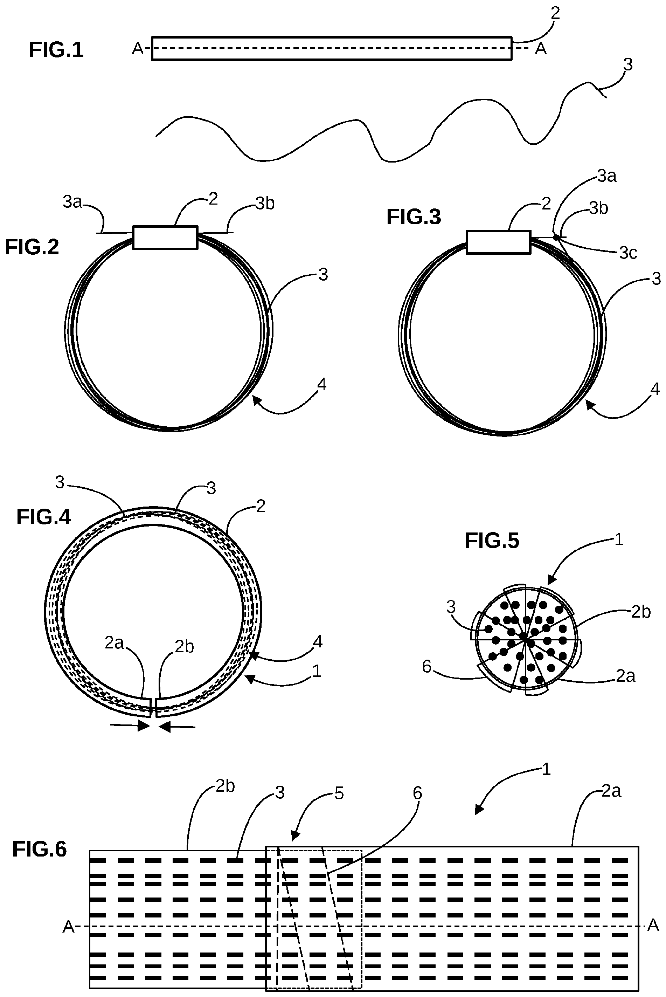

Les figures 1 à 14 illustrent un connecteur textile 1 ainsi que les étapes de son procédé de fabrication ou son intégration dans un harnais d'encordement. Le connecteur textile 1 est formé au moyen d'un élément textile 2 de forme tubulaire et d'un élément filaire 3. L'élément filaire 3 est un fil de section quelconque, par exemple circulaire, rectangulaire ou carrée. L'élément filaire 3 est un fil de résistance qui assure la tenue mécanique à un effort en traction du connecteur textile 1. L'élément textile peut être un élément tissé, un élément tricoté ou un élément tressé de forme tubulaire. Préférentiellement, l'élément textile est formé en une seule opération de tissage, de tricotage ou de tressage, c'est-à-dire sans déplacement de l'élément textile sur un autre équipement.

L'élément filaire 3 est apte à être enroulé de manière à former une pluralité de boucles 4, c'est-à-dire une pluralité de cercles. Les boucles 4 sont disposées les unes derrière les autres selon l'axe longitudinal de l'élément filaire 3. Les boucles 4 sont disposées les unes sur les autres de manière à former une forme générale annulaire.

L'élément textile 2 s'étend selon un axe longitudinal A et il définit un trou traversant selon l'axe longitudinal. Lors de la formation des multiples boucles 4, l'élément filaire 3 passe par le trou traversant. Par exemple, une extrémité de l'élément filaire 3 est associée à une aiguille et l'aiguille passe plusieurs fois à travers le trou traversant pour former les boucles 4. Pour faciliter le passage de l'élément filaire 3, il est avantageux de rétrécir la sangle tubulaire 2, c'est-à-dire en réduisant la longueur de la sangle tubulaire 2 selon l'axe longitudinal A, c'est-à-dire perpendiculairement au plan de coupe qui définit le trou traversant. Les deux extrémités de l'élément textile 2 sont destinées à se rejoindre pour former une gaine autour des boucles 4. Les deux extrémités se rejoignent pour définir un anneau.

Le nombre minimal de boucles 4 est fonction des performances recherchées pour le connecteur textile 1, pour des boucles 4 dans un matériau prédéfini.

Les multiples boucles 4 peuvent être réalisées de différentes manières. Dans un mode de réalisation avantageux illustré à la figure 2, les multiples boucles 4 sont formées et les deux extrémités des deux brins 3a et 3b de l'élément filaire 3 ne sont pas fixées l'une avec l'autre. Les deux extrémités sont libres de mouvement l'une par rapport à l'autre. Les boucles 4 sont maintenues en place par les forces de frottement qui existent entre les multiples portions du fils qui forment les boucles 4. Plus on augmente le nombre de boucles 4 et plus on augmente les surfaces de contact entre les boucles 4 ce qui a pour effet d'augmenter les forces de frottement. Même en l'absence de nœuds aux extrémités de l'élément filaire, les boucles 4 sont en mesure de conserver leurs dimensions lorsqu'elles sont soumises à un effort qui tend à ouvrir les boucles 4.

Le nombre de boucles 4 à former pour obtenir le maintien des boucles 4 est fonction du taux d'occupation des fils dans le trou traversant de la sangle tubulaire et de l'état de surface du fil. Plus le fil est rugueux et plus les forces de frottement seront importantes ce qui permet de réduire le nombre de tours 4. Afin de réduire le nombre de boucles 4, il est avantageux d'avoir un fil dont la rugosité de surface augmente afin d'avoir une force de frottement statique la plus élevée possible. La surface est rugueuse et préférentiellement dépourvue de crêtes annulaires ou de rainures annulaires.

Afin de réduire de nombre de boucles, il est avantageux de limiter les possibilités de déplacement des boucles 4 les unes par rapport aux autres à l'intérieure de la gaine. Il est également avantageux d'avoir un taux de remplissage du trou traversant par le fil d'au moins 50%, préférentiellement au moins 60% encore plus préférentiellement au moins 70% voire au moins 80% ou 90% en volume. En choisissant judicieusement la section interne de la gaine, la section du fil, et la rugosité de surface du fil, il est possible d'empêcher l'ouverture des boucles 4 à partir de quatre boucles 4. Lors de la sollicitation, ce sont les frottements entre les boucles 4 qui assurent le maintien et non la résistance mécanique de la gaine. Il est avantageux de former au moins 10 boucles, préférentiellement au moins 15 boucles, voire au moins 20 boucles ou au moins 30 boucles.

Dans une alternative de réalisation, les multiples boucles 4 sont formées et les deux extrémités des deux brins 3a et 3b de l'élément filaire 3 sont fixées l'une avec l'autre. Il est avantageux que la fixation soit un nœud 3c formé par la première extrémité 3a avec la deuxième extrémité 3b. Comme les deux extrémités sont fixées, il est possible d'utiliser un nombre réduit de boucles 4, de préférence moins de dix boucles 4. Ce mode de réalisation permet de relâcher les contraintes sur la rugosité de surface de l'élément filaire 3 et sur le taux de remplissage de la gaine par les boucles 4 en élément filaire 3.

Une fois les boucles 4 formée, l'élément textile 2 est étiré de sorte que les deux extrémités opposées selon la direction longitudinale A soient en contact l'une avec l'autre. L'élément textile 2 définit une première extrémité et une deuxième extrémité qui sont opposées selon l'axe longitudinal A. L'élément textile 2 suit le fil 3 et reproduit la forme des boucles 4. L'élément textile 2 forme un anneau tubulaire. L'élément textile 2 forme un tube qui limite les déplacements des boucles 4 les unes par rapport aux autres. De manière préférentielle, l'élément textile 2 définit une première extrémité dite extrémité externe 2a qui est disposée autour d'une deuxième extrémité dite extrémité interne 2b comme cela est illustré à la figure 4. L'extrémité externe 2a recouvre l'extrémité interne 2b et définit une zone de recouvrement qui est de forme annulaire. Dans une alternative de réalisation, les deux extrémités sont mises en vis-à-vis selon l'axe longitudinal A, il est possible d'ajouter un renfort annulaire qui recouvre les deux extrémités et qui est traversé par les multiples boucles 4. Le renfort annulaire peut être un élément textile, en matériau polymère ou dans tout matériau adapté pour faciliter la fixation des deux extrémités.

Les boucles 4 sont limitées en déplacement les unes par rapport aux autres au moyen de la sangle tubulaire 2. La sangle tubulaire 2 est préférentiellement réalisée dans un matériau qui possède une résistance mécanique inférieure à la résistance mécanique de l'ensemble des boucles 4 pour des efforts qui tendent à augmenter le diamètre des boucles 4. En d'autres termes, la résistance mécanique du connecteur textile 1 qui s'oppose à une force en tension selon un diamètre n'est pas procurée par la sangle tubulaire 2 mais par les multiples boucles 4. En l'absence des boucles 4, la sangle tubulaire 2 se déchire alors que le connecteur textile 1 muni des boucles 4 supporte l'effort, les autres caractéristiques étant identiques.

La première extrémité et la deuxième extrémité de la sangle tubulaire 2 sont fixées ensemble par une couture 5. La couture 5 est formée au moyen d'au moins un fil de couture 6 qui traverse plusieurs fois la sangle tubulaire 2. La couture définit une pluralité de liaisons au moyen du au moins un fil de couture 6 qui montent fixement la première extrémité tubulaire avec la deuxième extrémité tubulaire pour fermer l'anneau tubulaire autour des boucles 4. Les liaisons sont décalées angulairement les unes des autres lors d'une observation selon l'axe longitudinal A. Les liaisons sont disposées tournantes autour de l'axe longitudinal A passant au centre ou quasiment au centre de la section du tube. Les figures 5, 6, 7, 8, 9 et 10 illustrent différents modes de réalisation des liaisons qui relient fixement les deux extrémités selon la direction longitudinale A.

La couture 5 est une couture radiale avec des liaisons qui traversent une section centrale de la sangle tubulaire 2. La section centrale correspond à une section circulaire représentant moins de 50% de la section du tube. Un tel mode de réalisation est illustré à la figure 5. Ce mode de réalisation permet de limiter les déplacements des boucles 4 en élément filaire.

Les brins du au moins un fil de couture 6 traversent exactement ou approximativement la sangle tubulaire 2 pour former un diamètre ce qui limite les déplacements du fil 3 formant les boucles 4 dans le tube. La surépaisseur de la sangle tubulaire 2 provenant de la zone de recouvrement est limitée à un anneau de faible dimension selon la direction longitudinale A ce qui permet d'avoir un meilleur comportement du connecteur textile 1 lorsqu'on le déforme. Il ressort également que la couture 5 radiale est réalisée sur une longueur plus faible ce qui rend cette opération plus intéressante à réaliser.

Dans un mode de réalisation illustré à la figure 6, un premier jeu de liaisons est contenu dans un plan qui est perpendiculaire à l'axe longitudinal A. En d'autres termes, les liaisons définissent une couture 5 purement radiale. Les liaisons forment des diamètres ou sensiblement des diamètres qui sont inclues dans un même plan. Les liaisons traversent uniquement la zone de recouvrement afin de fixer les deux couches d'élément textile 2. Entre deux liaisons, le fils de couture 6 s'étend exclusivement perpendiculairement à l'axe longitudinal A.

Dans un autre mode de réalisation illustré également à la figure 6, un deuxième jeu de liaisons se présente sous la forme d'une couture 5 en spirale. Deux liaisons consécutives sont décalées selon l'axe longitudinal A. Entre deux liaisons, le fils 6 s'étend majoritairement perpendiculairement à l'axe longitudinal A. La portion du fil de couture 6 qui court le long de la paroi externe de la sangle tubulaire 2 s'étend selon l'axe longitudinal A et selon un secteur angulaire du cercle perpendiculaire à l'axe longitudinal A tel que celui illustré à la figure 5. La figure 6 illustre un recouvrement entre les deux extrémités de l'élément textile 2 avec des boucles 4 représentées en pointillées et des liaisons qui forment un tour complet en configuration radiale et deux tours complets en configuration spirale.

De manière préférentielle, les multiples liaisons relient la paroi externe de la première extrémité avec la paroi externe de la deuxième extrémité en enjambant l'interface entre les deux extrémités selon la direction longitudinale A pour fermer l'anneau. Cette configuration permet de définir une glissière annulaire autour de la direction longitudinale A. Un connecteur qui glisse contre la paroi externe de la gaine vient au contact des liaisons et glisse sur la ou les terminaisons de la gaine. Ce mode de réalisation est avantageux lorsque les deux extrémités de l'élément textile 2 sont disposées en vis-à-vis selon la direction longitudinale A, préférentiellement en contact.

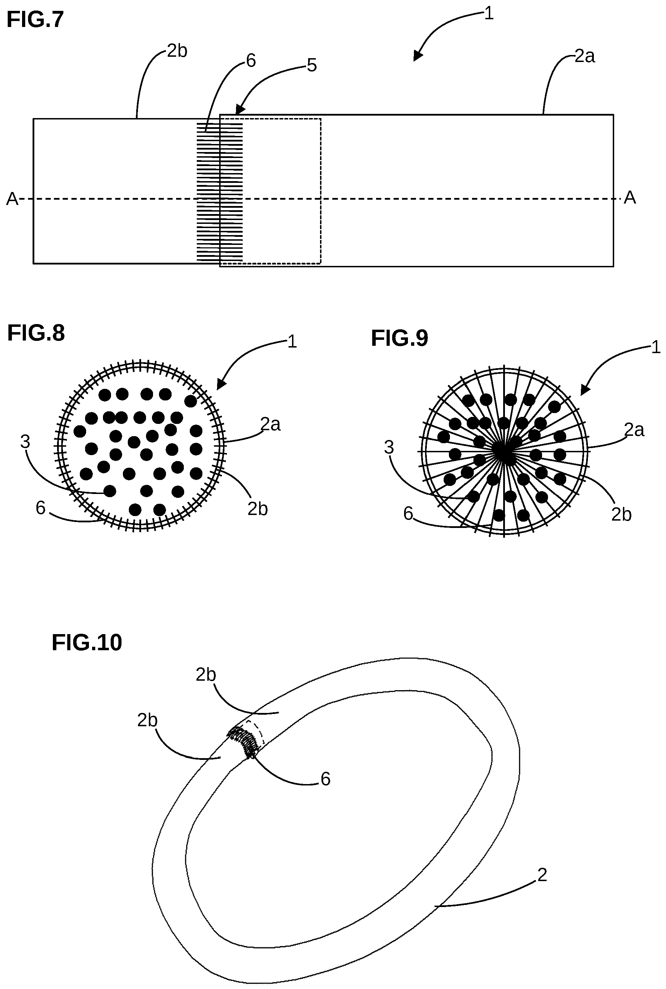

Cependant, il est particulièrement avantageux qu'il y ait recouvrement et que le fil de couture 6 court le long de la paroi externe de la sangle tubulaire 2 depuis l'extrémité externe 2a jusqu'à l'extrémité interne 2b. Le fil de couture 6 s'enfonce à l'intérieur de la sangle tubulaire 2 dans la zone de recouvrement pour fixer l'extrémité externe 2a avec l'extrémité interne 2b et il s'enfonce également dans l'extrémité interne 2b hors de la zone de recouvrement. Le fils de couture 6 forme une glissière au-dessus de la portion terminale de l'extrémité externe 2a de manière à plaquer la portion terminale de l'extrémité externe 2a contre l'extrémité interne 2b ou à tout le moins éviter que la portion terminale de l'extrémité interne se relève lorsqu'un élément glisse contre la sangle tubulaire 2. Un mode de réalisation est illustré à la figure 7 avec des portions de fils de couture 6 qui s'étendent exclusivement selon l'axe longitudinal A, mais un désalignement des coutures 5 par rapport à l'axe A est possible tant que la couture 5 relie l'extrémité externe dans la zone de recouvrement avec l'extrémité interne hors de la zone de recouvrement. Les liaisons adjacentes sont décalées angulairement et forment une glissière annulaire qui surmonte la partie terminale de l'extrémité externe de sorte que le glissement d'un élément le long du connecteur textile 1 selon la direction longitudinale A ne vienne pas se prendre contre la partie terminale. Le recouvrement permet de former une surépaisseur qui rigidifie légèrement l'anneau et facilite la formation des liaisons. La figure 7 illustrent des liaisons qui plaque la partie terminale de l'extrémité externe contre l'extrémité interne en formant des glissières. Dans le mode de réalisation illustré, les liaisons sont parallèles à la direction longitudinale A dans leur partie externe, il est possible de les décaler angulairement. Le mode de réalisation illustré à la figure 7 est réalisé avec une couture 5 radiale comme cela est illustré à la figure 9.

Pour avoir une couture 5 efficace entre les deux extrémités de la sangle tubulaire 2, les liaisons successives s'étendent sur un secteur angulaire au moins égal à 180°. L'angle est mesuré avec une observation selon l'axe longitudinal 1. De manière encore plus préférentielle, les liaisons successives s'étendent sur un secteur angulaire au moins égal à 360°. Un angle de 360° correspond à une couverture complète de la périphérie et une couverture à plus de 360° correspond à deux coutures 5 qui se chevauchent dans une observation selon l'axe longitudinal A.

L'élément textile 2 tubulaire peut présenter un motif de tissage quelconque et peut être une tresse ou un tricot.

De manière préférentielle, les multiples boucles 4 occupent plus de 30% du volume interne défini par l'élément textile 2, préférentiellement plus de 50% et encore plus préférentiellement plus de 70% voire plus de 80%. Avantageusement, les multiples boucles 4 occupent moins de 90% du volume interne défini par la sangle tubulaire.

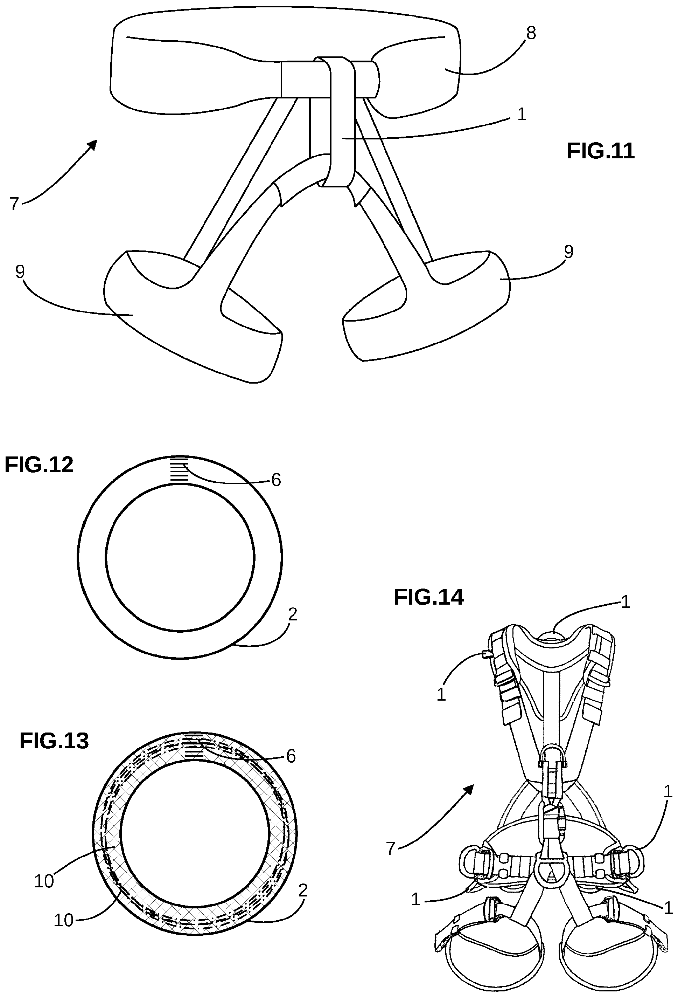

La figure 11 illustre un harnais d'encordement 7 qui comporte une ceinture 8 et une paire de tours de cuisse 9. La ceinture 8 est connectée aux tours de cuisse 9 par le connecteur textile 1. Le connecteur textile 1 est apte à former un point de suspension ventral, c'est-à-dire qu'il est apte à suspendre l'utilisateur portant le harnais. Cependant, le connecteur textile 1 peut être utilisé pour former une autre partie d'un harnais d'encordement, par exemple un point d'accrochage sternal, un point d'accrochage sur une bretelle. Il est également possible de fixer le connecteur textile 1 à une longe.

De manière plus générale, il est intéressant de former un anneau en matériau textile dont le compromis entre le poids, les performances mécaniques et le cout est mieux maitrisé. Lorsque les performances mécaniques recherchées sont importantes, il est intéressant de remplir le tube avec plusieurs boucles 4 d'élément filaire 3. En revanche, pour des performances mécaniques moins importantes, l'anneau peut être dépourvu des boucles 4 en élément filaire 3. La tenue mécanique est fournie par les caractéristiques mécaniques du tube textile. La figure 12 illustre un connecteur textile 1 dépourvu de boucles en élément filaire 3.

Selon la configuration du connecteur, ce dernier peut être utilisé comme un anneau d'accrochage ventral d'un harnais d'encordement par exemple un harnais d'alpinisme. Le connecteur peut être utilisé comme un anneau de fermeture d'un harnais d'encordement pour la formation d'un point d'accrochage sternal, par exemple pour un anneau sternal d'un harnais commercialisé sous la dénomination NEWTON ou VOLT. Il est encore possible d'utiliser le connecteur textile 1 comme un porte-matériel d'un harnais d'encordement, d'un sac-à-dos d'un sac porte-outil et plus généralement d'un sac. Le connecteur textile 1 peut être fixé à un autre connecteur, préférentiellement un connecteur métallique, par exemple un mousqueton. Le connecteur textile peut être utilisé comme une poignée pour supporter une civière. La figure 14 illustre un harnais d'encordement muni d'un point de suspension dorsal, un point de suspension latéral ou un point de suspension ventral formé par un connecteur textile 1. Le harnais d'encordement est muni de portes-matériels disposés sur la ceinture 8 ou sur une bretelle.

Le connecteur textile possède un tube textile monobloc, c'est-à-dire un élément intrinsèquement annulaire, par exemple une sangle tubulaire ou une tresse, dont les deux extrémités sont reliées l'une à l'autre et qui sont fixées par une couture 5 radiale. Le tube est fermé au moyen d'une seule couture 5 qui est annulaire ce qui permet d'avoir une épaisseur plus homogène sur tout le pourtour de l'anneau tubulaire.

Lorsque l'anneau est dépourvu de boucles d'élément filaire 3 à l'intérieur du tube, il est avantageux de remplir le tube par un élément de remplissage 10 afin d'éviter que l'anneau ne s'aplatisse. La figure 13 illustre un connecteur textile 1 qui est rempli par différents éléments de remplissage 10. L'élément de remplissage 10 possède une résistance à la traction qui est inférieure à la résistance à la traction de l'anneau tubulaire seul. L'effet mécanique de l'élément de remplissage 10 sur les performances du connecteur textile 1 est faible voire nul par rapport à ce qui est fourni par l'anneau textile seul. Par exemple, l'intérieur du tube est rempli par une mousse, un gel ou une pâte. L'élément de remplissage 10 peut être un élément filaire de remplissage, par exemple un fil, une corde, une cordelette ou une sangle. Il peut être intéressant d'utiliser un élément filaire de remplissage afin d'augmenter le frottement entre les fils qui forment les boucles 4 même si l'élément filaire de remplissage présente des performances mécaniques moindre, par exemple une moindre résistance à la traction.

Il est préférable que le matériau disposé à l'intérieur du tube soit traversé par le fil de la couture 5. Le matériau de remplissage 10 possède une résistance à l'allongement qui est inférieure à la résistance à l'allongement du tube. Les performances mécaniques sont fournies par le tube et non par le matériau de remplissage 10 qui intervient uniquement pour définir la forme du connecteur textile 1.

## Revendications

1. Connecteur textile annulaire (1) comportant :
- un élément textile tubulaire (2) ayant une première extrémité et une deuxième extrémité opposées selon un axe longitudinal (A), l'élément textile tubulaire (2) étant une sangle tubulaire, un tricot tubulaire ou une tresse tubulaire, la première extrémité rejoignant la deuxième extrémité pour conformer l'élément textile tubulaire (2) en un anneau tubulaire ;
- une couture (5) formée au moyen d'au moins un fil de couture (6) qui traverse plusieurs fois l'élément textile tubulaire (2) pour fermer l'anneau tubulaire ;
**caractérisé en ce que** la couture (5) est une couture radiale de la première extrémité avec la deuxième extrémité, la couture radiale possédant des liaisons qui traversent une section centrale de l'élément textile tubulaire (2), la section centrale correspondant à une section circulaire représentant moins de 50% de la section de l'élément textile tubulaire (2), la couture radiale définissant des liaisons décalées angulairement les unes des autres lors d'une observation selon l'axe longitudinal (A);
**en ce que** l'anneau tubulaire forme une gaine autour d'au moins un d'un élément filaire (3) et d'un élément de remplissage (10) ;
dans lequel, le cas échéant, l'élément filaire (3) forme une pluralité de boucles (4) à l'intérieur de la gaine, l'élément textile tubulaire (2) étant réalisé dans un matériau qui possède une résistance mécanique inférieure à la résistance mécanique de l'ensemble des boucles (4) pour des efforts qui tendent à augmenter le diamètre des boucles (4), et
dans lequel, le cas échéant, l'élément de remplissage (10) possède une résistance à la traction inférieure à une résistance à la traction de l'anneau tubulaire.

2. Connecteur textile annulaire (1) selon la revendication 1 dans lequel les liaisons relient une face externe de la première extrémité et une face externe de la deuxième extrémité et forment une glissière selon l'axe longitudinal (A) entre la face externe de la première extrémité et la face externe de la deuxième extrémité.

3. Connecteur textile annulaire (1) selon la revendication 2 dans lequel la première extrémité est une extrémité externe (2a) qui recouvre la deuxième extrémité formant une extrémité interne (2b), l'extrémité externe (2a) recouvrant l'extrémité interne (2b) pour définir une zone de recouvrement et dans lequel les liaisons s'étendent depuis la zone de recouvrement de l'extrémité externe (2a) jusqu'à l'extrémité interne (2b) hors de la zone de recouvrement selon l'axe longitudinal (A).

4. Connecteur textile annulaire (1) selon la revendication 1 dans lequel deux liaisons consécutives sont décalées selon l'axe longitudinal (A).

5. Connecteur textile annulaire (1) selon la revendication 1 dans lequel les liaisons sont contenues dans un plan qui est perpendiculaire à l'axe longitudinal (A).

6. Connecteur textile annulaire (1) selon l'une quelconque des revendications 1 à 5 dans lequel les liaisons successives s'étendent sur un secteur angulaire au moins égal à 180°.

7. Connecteur textile annulaire (1) selon la revendication précédente dans laquelle les liaisons successives s'étendent sur un secteur angulaire au moins égal à 360°.

8. Connecteur textile annulaire (1) selon l'une quelconque des revendications 1 à 7 dans lequel l'élément filaire (3) possède une première extrémité (3a) et une deuxième extrémité (3b) qui ne sont pas fixées l'une à l'autre, l'élément filaire (3) définissant au moins quatre boucles (4).

9. Connecteur textile annulaire (1) selon l'une quelconque des revendications 1 à 7 dans lequel l'élément filaire (3) possède une première extrémité (3a) et une deuxième extrémité (3b) qui sont fixées l'une à l'autre par un nœud (3c).

10. Connecteur textile annulaire (1) selon l'une quelconque des revendications 1 à 9 dans lequel les boucles (4) représentent un taux de remplissage de l'intérieur de l'anneau tubulaire d'au moins 50%.

11. Connecteur textile annulaire (1) selon l'une quelconque des revendications 1 à 10 dans lequel l'élément de remplissage (10) est choisi parmi une mousse, un gel, une pâte et un élément filaire de remplissage.

12. Harnais d'encordement (7) comportant une ceinture (8), une paire de tours de cuisse (9) et un connecteur textile annulaire (1) selon l'une quelconque des revendications précédentes, le connecteur textile annulaire (1) reliant la ceinture (8) et la paire de tours de cuisse (9) ou formant un point de suspension dorsal ou sternal.

13. Procédé de fabrication d'un connecteur textile annulaire (1) comportant les étapes suivantes :
- fournir un élément textile tubulaire (2) définissant un trou traversant, l'élément textile tubulaire (2) étant choisi parmi une sangle tubulaire, un tricot tubulaire ou une tresse tubulaire ;
- fournir au moins l'un d'un élément filaire (3) et d'un élément de remplissage (10);
- enrouler l'élément filaire (3) pour former une pluralité de boucles (4), chaque boucle (4) passant à travers le trou traversant de l'élément textile tubulaire (2), et/ou disposer l'élément de remplissage (10) dans élément textile tubulaire (2) ;
- conformer l'élément textile tubulaire (2) pour rejoindre les deux extrémités longitudinales de l'élément textile tubulaire (2) et former un anneau tubulaire, l'élément textile tubulaire (2) conformé en un anneau tubulaire formant une gaine autour de la pluralité de boucles (4) et/ou de l'élément de remplissage (10) ;
- fixer les deux extrémités de l'élément textile tubulaire (2) par une couture (5) formée au moyen d'au moins un fil de couture (6) traversant plusieurs fois les deux extrémités longitudinales de l'élément textile tubulaire (2) pour fermer l'anneau tubulaire, la couture (5) étant une couture radiale avec des liaisons qui traversent une section centrale de l'élément textile tubulaire (2), la section centrale correspondant à une section circulaire représentant moins de 50% de la section de l'élément textile tubulaire (2), la couture (5) définissant des liaisons décalées angulairement les unes des autres lors d'une observation selon l'axe longitudinal (A) ;
dans lequel, le cas échéant, l'élément textile tubulaire (2) est réalisé dans un matériau qui possède une résistance mécanique inférieure à la résistance mécanique de l'ensemble des boucles (4) pour des efforts qui tendent à augmenter le diamètre des boucles (4) et dans lequel, le cas échéant, l'élément de remplissage (10) possède une résistance à la traction inférieure à une résistance à la traction de l'anneau tubulaire.

## Patentansprüche

1. Ringförmiger Textilverbinder (1), umfassend:
- ein schlauchförmiges Textilelement (2) mit einem ersten Ende und einem zweiten Ende, die entlang einer Längsachse (A) entgegengesetzt sind, wobei das schlauchförmige Textilelement (2) ein schlauchförmiges Gurtband, ein schlauchförmiges Gestrick oder ein schlauchförmiges Geflecht ist und das erste Ende auf das zweite Ende trifft, um das schlauchförmige Textilelement (2) zu einem schlauchförmigen Ring zu bilden;
- eine Naht (5), die durch mindestens einen Nähfaden (6) gebildet wird, der das schlauchförmige Textilelement (2) mehrmals durchquert, um den schlauchförmigen Ring zu schließen;
**dadurch gekennzeichnet, dass** die Naht (5) eine radiale Naht des ersten Endes mit dem zweiten Ende ist, wobei die radiale Naht Verbindungen aufweist, die einen zentralen Querschnitt des schlauchförmigen Textilelements (2) durchqueren, wobei der zentrale Querschnitt einem kreisförmigem Querschnitt entspricht, der weniger als 50 % des Querschnitts des schlauchförmigen Textilelements (2) ausmacht, und die radiale Naht Verbindungen definiert, die entlang der Längsachse (A) gesehen zueinander winkelversetzt sind;
dass der schlauchförmige Ring einen Mantel um mindestens eines von einem fadenförmigen Element (3) und einem Füllelement (10) bildet;
wobei gegebenenfalls das fadenförmige Element (3) im Inneren des Mantels eine Vielzahl von Schlaufen (4) bildet, wobei das schlauchförmige Textilelement (2) aus einem Material hergestellt ist, dessen mechanische Festigkeit geringer ist als die mechanische Festigkeit der Gesamtheit der Schlaufen (4) bei Kräften, die dazu neigen, den Durchmesser der Schlaufen (4) zu vergrößern, und
wobei gegebenenfalls das Füllelement (10) eine Zugfestigkeit aufweist, die geringer ist als eine Zugfestigkeit des schlauchförmigen Rings.

2. Ringförmiger Textilverbinder (1) nach Anspruch 1, wobei die Verbindungen eine Außenfläche des ersten Endes und eine Außenfläche des zweiten Endes verbinden und eine Gleitverbindung entlang der Längsachse (A) zwischen der Außenfläche des ersten Endes und der Außenfläche des zweiten Endes bilden.

3. Ringförmiger Textilverbinder (1) nach Anspruch 2, wobei das erste Ende ein äußeres Ende (2a) ist, das das zweite Ende überlappt, das ein inneres Ende (2b) bildet, wobei das äußere Ende (2a) das innere Ende (2b) überlappt, um einen Überlappungsbereich zu bilden, und wobei die Verbindungen sich vom Überlappungsbereich des äußeren Endes (2a) entlang der Längsachse (A) bis zum inneren Ende (2b) außerhalb des Überlappungsbereichs erstrecken.

4. Ringförmiger Textilverbinder (1) nach Anspruch 1, wobei zwei aufeinanderfolgende Verbindungen entlang der Längsachse (A) versetzt sind.

5. Ringförmiger Textilverbinder (1) nach Anspruch 1, wobei die Verbindungen in einer Ebene liegen, die senkrecht zur Längsachse (A) ist.

6. Ringförmiger Textilverbinder (1) nach einem der Ansprüche 1 bis 5, wobei die aufeinanderfolgenden Verbindungen sich über einen Winkelbereich von mindestens 180° erstrecken.

7. Ringförmiger Textilverbinder (1) nach dem vorherigen Anspruch, wobei die aufeinanderfolgenden Verbindungen sich über einen Winkelbereich von mindestens 360° erstrecken.

8. Ringförmiger Textilverbinder (1) nach einem der Ansprüche 1 bis 7, wobei das fadenförmige Element (3) ein erstes Ende (3a) und ein zweites Ende (3b) aufweist, die nicht aneinander befestigt sind, wobei das fadenförmige Element (3) mindestens vier Schlaufen (4) definiert.

9. Ringförmiger Textilverbinder (1) nach einem der Ansprüche 1 bis 7, wobei das fadenförmige Element (3) ein erstes Ende (3a) und ein zweites Ende (3b) aufweist, die durch einen Knoten (3c) aneinander befestigt sind.

10. Ringförmiger Textilverbinder (1) nach einem der Ansprüche 1 bis 9, wobei die Schlaufen (4) einen Füllungsgrad des Inneren des schlauchförmigen Rings von mindestens 50 % ausmachen.

11. Ringförmiger Textilverbinder (1) nach einem der Ansprüche 1 bis 10, wobei das Füllelement (10) aus einem Schaumstoff, einem Gel, einer Paste und einem fadenförmigen Füllelement gewählt ist.

12. Anseilgurt (7), umfassend einen Hüftgurt (8), ein Paar Beinschlaufen (9) und einen ringförmigen Textilverbinder (1) nach einem der vorherigen Ansprüche, wobei der ringförmige Textilverbinder (1) den Hüftgurt (8) und das Paar Beinschlaufen (9) verbindet oder einen rücken- oder bauchseitigen Aufhängungspunkt bildet.

13. Verfahren zur Herstellung eines ringförmigen Textilverbinders (1), umfassend die folgenden Schritte:
- Bereitstellen eines schlauchförmigen Textilelements (2), das ein Durchgangsloch definiert, wobei das schlauchförmige Textilelement (2) aus einem schlauchförmigen Gurtband, einem schlauchförmigen Gestrick oder einem schlauchförmigen Geflecht gewählt ist;
- Bereitstellen mindestens eines von einem fadenförmigen Element (3) und einem Füllelement (10);
- Einrollen des fadenförmigen Elements (3), um eine Vielzahl von Schlaufen (4) zu bilden, wobei jede Schlaufe (4) das Durchgangsloch des schlauchförmigen Textilelements (2) durchläuft, und/oder Anordnen des Füllelements (10) in das schlauchförmige Textilelement (2);
- Verformen des schlauchförmigen Textilelements (2), um die zwei längsseitigen Enden des schlauchförmigen Textilelements (2) aufeinander treffen zu lassen und einen schlauchförmigen Ring zu bilden, wobei das zu einem schlauchförmigen Ring geformte schlauchförmige Textilelement (2) um die Vielzahl von Schlaufen (4) und/oder das Füllelement (10) herum einen Mantel bildet;
- Befestigen der zwei Enden des schlauchförmigen Textilelements (2) durch eine Naht (5), die durch mindestens einen Nähfaden (6) gebildet wird, der die zwei längsseitigen Enden des schlauchförmigen Textilelements (2) mehrmals durchquert, um den schlauchförmigen Ring zu schließen, wobei die Naht (5) eine radiale Naht mit Verbindungen ist, die einen zentralen Querschnitt des schlauchförmigen Textilelements (2) durchqueren, wobei der zentrale Querschnitt einem kreisförmigen Querschnitt entspricht, der weniger als 50 % des Querschnitts des schlauchförmigen Textilelements (2) ausmacht, wobei die Naht (5) Verbindungen definiert, die entlang der Längsachse (A) gesehen zueinander winkelversetzt sind;
wobei gegebenenfalls das schlauchförmige Textilelement (2) aus einem Material hergestellt ist, dessen mechanische Festigkeit geringer ist als die mechanische Festigkeit der Gesamtheit der Schlaufen (4) bei Kräften, die dazu neigen, den Durchmesser der Schlaufen (4) zu vergrößern, und
wobei gegebenenfalls das Füllelement (10) eine Zugfestigkeit aufweist, die geringer ist als die Zugfestigkeit des schlauchförmigen Rings.

## Claims

1. Annular textile connector (1) comprising:
- a tubular textile element (2) having a first end and an opposite second end along a longitudinal axis (A), the tubular textile element (2) being a tubular webbing, a tubular knitted fabric or a tubular braid, the first end joining the second end to shape the tubular textile element (2) as a tubular ring;
- a seam (5) formed by means of at least one seam yarn (6) that passes through the tubular textile element (2) several times to close the tubular ring;
**characterised in that** the seam (5) is a radial seam connecting the first end to the second end, the radial seam having joins that pass through a central section of the tubular textile element (2), the central section corresponding to a circular section representing less than 50% of the cross-sectional area of the tubular textile element (2), the radial seam defining joins that are angularly offset from one another when viewed along the longitudinal axis (A);
**in that** the tubular ring forms a sheath around at least one of a yarn (3) and a filling element (10);
wherein, where applicable, the yarn (3) forms a plurality of loops (4) inside the sheath, the tubular textile element (2) being made from a material that has a lower strength than the strength of the plurality of loops (4) for forces that tend to increase the diameter of the loops (4); and
wherein, where applicable, the filling element (10) has a lower tensile strength than a tensile strength of the tubular ring.

2. Annular textile connector (1) according to claim 1 wherein the joins secure an outer face of the first end and an inner face of the second end and form a slideway in the longitudinal direction (A) between the outer face of the first end and the outer face of the second end.

3. Annular textile connector (1) according to claim 2 wherein the first end is an outer end (2a) that overlaps the second end forming an inner end (2b), the outer end (2a) overlapping the inner end (2b) to define an overlap area and wherein the joins extend from the overlap area of the outer end (2a) up to the inner end (2b) outside the overlap area in the longitudinal direction (A).

4. Annular textile connector (1) according to claim 1 wherein two consecutive joins are offset in the longitudinal direction (A).

5. Annular textile connector (1) according to claim 1 wherein the joins are contained in a plane that is perpendicular to the longitudinal axis (A).

6. Annular textile connector (1) according to anyone of claims 1 to 5 wherein the successive joins extend over an annular sector at least equal to 180°.

7. Annular textile connector (1) according to the preceding claim wherein the successive joins extend over an annular sector at least equal to 360°.

8. Annular textile connector (1) according to anyone of claims 1 to 7 wherein the yarn (3) has a first end (3a) and a second end (3b) that are not secured to one another, the yarn (3) defining at least four loops (4).

9. Annular textile connector (1) according to anyone of claims 1 to 8 wherein the yarn (3) has a first end (3a) and a second end (3b) that are secured to one another by a knot (3c).

10. Annular textile connector (1) according to anyone of claims 1 to 9 wherein the loops (4) represent an occupancy ratio of the inside of the tubular ring of at least 50%.

11. Annular textile connector (1) according to anyone of claims 1 to 10 wherein the filling element (10) is chosen from a foam, a gel, a paste and a filling yarn.

12. Roping harness (7) comprising a belt (8), a pair of leg loops (9) and an annular textile connector (1) according to any one of the preceding claims, the annular textile connector (1) connecting the belt (8) and the pair of leg loops (9) or forming a dorsal or sternal suspension point.

13. Method for manufacturing an annular textile connector (1) comprising the following steps:
- providing a tubular textile element (2) defining a through hole, the tubular textile element (2) being chosen from a tubular webbing, a tubular knitted fabric or a tubular braid;
- providing at least one of a yarn (3) and a filling element (10);
- winding the yarn (3) to form a plurality of loops (4), with each loop (4) passing through the through-hole in the tubular textile element (2), and/or place the filling element (10) inside the tubular textile element (2);
- shaping the tubular textile element (2) to join the two longitudinal ends of the tubular textile element (2) and form a tubular ring, the tubular textile element (2) shaped as a tubular ring forming a sheath around the plurality of loops (4) and/or the filling element (10);
- securing the two ends of the tubular textile element (2) by a seam (5) formed by means of at least one seam yarn (6) passing through the two longitudinal ends of the tubular textile element (2) several times to close the tubular ring, the seam (5) being a radial seam with joins that pass through a central section of the tubular textile element (2), the central section corresponding to a circular section representing less than 50% of the cross-sectional area of the tubular textile element (2), the seam (5) defining joins that are angularly offset from one another when viewed along the longitudinal axis (A);
wherein, when applicable, the tubular textile element (2) being made from a material that has a lower strength than a strength of the plurality of loops (4) for forces that tend to increase the diameter of the loops (4) and wherein the filling element (10) has a lower tensile strength than a tensile strength of the tubular ring.
